# EUROPEAN PATENT APPLICATION

(11) **EP 1 398 704 A1**
(43) Date of publication of application: **17.03.2004**
(21) Application number: 03743025.3
(22) Date of filing: 26.02.2003
(51) Int. Cl.: G06F 12/14, H04L 9/08

(54) **HOST DEVICE**

(30) Priority: 27.02.2002 JP 2002050963
(71) Applicant: MATSUSHITA ELECTRIC INDUSTRIAL CO., LTD., Kadoma-shi, Osaka 571-8501 (JP)
(72) Inventor: MIYAMOTO, Harutoshi, Ibaraki-shi, Osaka 567-0893 (JP)
(74) Representative: Grünecker, August, Dipl.-Ing.
(86) International application number: PCT/JP2003/002097
(87) International publication number: WO 2003/073295

(57) **Abstract**

The present invention provides a copyright management system, a copyright management system method, a host apparatus for the same, a program for the same, and a medium carrying such a program, all of which are convenient for a user to use.

A host apparatus which encodes a predetermined content by a predetermined encoding method, selects a particular reproducing device 5 in accordance with the number of reproducing devices 5 which are permitted to reproduce and sends, to said particular reproducing device 5 thus selected, decoding information which is for decoding said encoded content 6.

## Description

### BACKGROUND OF THE INVENTION

### Field of the Invention

The present invention relates to a host apparatus which manages licenses regarding copyrights on contents.

### Description of the Related Art

In these years, music mode copied not only from CD-DAs but also from other music sources such as mp3 (mpeg audio layer 3) is widely available to users. However, due to the lack of an established method of managing copyrights in relation to use of mp3, copyright holders face a big problem, and means to solve this problem have been proposed. In addition, there are ongoing endeavors to find a copyright management method for digital contents such as movies and images. For instance, a copyright management based on a music compression scheme called "WMA (Windows Media Audio)" implemented on personal computers uses a method called "DRM (Digital Right Management)." This method requires an ID peculiar to an encoder device when encoded music is to be decoded, thus limiting an encoder device and a reproducing device to the same device and thereby preventing proliferation of illegal copies. Methods of protecting copyrights on transmitted information have been proposed also for information distributing systems which target at small terminals such as mobile telephones (See Japanese Patent Application Laid-Open Gazette No. 2001-78266 for example). Information sent from a distributing server and peculiar IDs given to mobile telephones which are destinations of the information are registered on a management database on the server, so that only those registered mobile telephones can reproduce the information. The entire disclosure of the document are incorporated herein by reference is its entirety.

However, since this method demands as a prerequisite that each device can access the server on the network, reproducing devices not designed to connect to a network cannot realize this method.

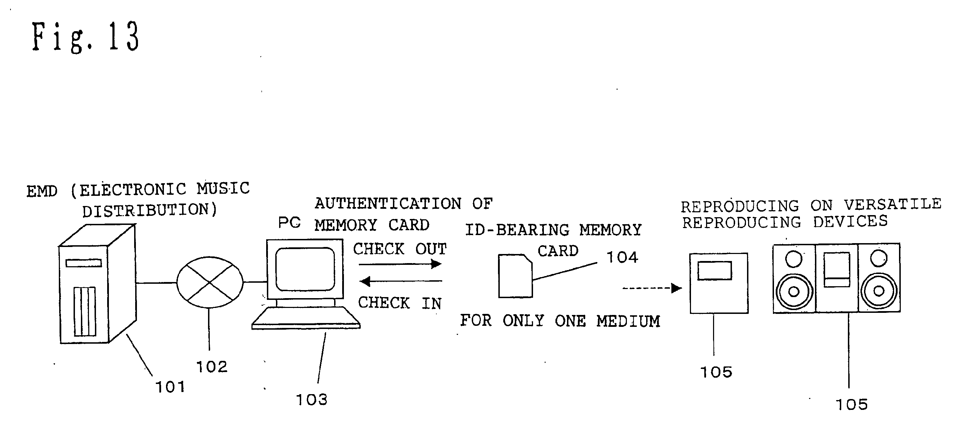

Meanwhile, a method shown in Fig. 13 has been proposed as a method of managing licenses on copyrights in reproducing devices which are not capable of accessing directly a network. In Fig. 13, denoted at 101 is an electronic music distributing server (EMD) , denoted at 102 is an Internet line, denoted at 103 is a user's personal computer, denoted at 104 is a medium such as an SD card (Secure Digital card) having a peculiar ID, and denoted at 105 is a general-purpose, reproducing device 105 which is not connected to the Internet line.

Between the personal computer 103 and the SD card 104, data are transmitted and received in the check-in/check-out method. A check-in and a check-out of data mean a transmission and a receipt of data between a personal computer, an external device and a medium while managing the number of times that the data are copied. A check-out refers to a transfer of data from a personal computer to an external device and a medium. In the event that there is a restriction on the number of check-outs of data (i.e., copying) , data cannot be checked out beyond the restriction. A check-in is to return data transferred to an external device and a medium from a personal computer back to the transmitter personal computer in such a manner that the data will not remain within the external device and the medium. On that occasion, the checked-out data can be returned back only to the transmitter personal computer. However, data returned to a personal computer in the form of a check-in can be checked out again.

According to this method, a content is handled together with a peculiar ID of the SD card 104 which is a medium and therefore the original content and copies of the same are distinguished from each other for the purpose of a copyright management. To be more specific, content data are checked out only to an authenticated SD card 104, whereby unauthorized copying of the data is prevented. In short, a user downloads content data to his or her personal computer 103 from the EMD server 101 via the Internet line 102. As the SD card 104 is inserted in 'the personal computer 103, the personal computer 103 confirms that the SD card 104 has a preset ID which was already authenticated. The personal computer 103 then checks out the content data from the personal computer 103. The SD card 104 now loaded with the desired content data is inserted in the general-purpose reproducing device 105, which in turn allows the general-purpose reproducing device 105 to reproduce the desired content.

However, because of the check-in/check-out function of the personal computer 103, it is not possible to copy the desired content data beyond a certain number of times. Hence, when one wishes to reproduce the desired content with the plurality of general-purpose reproducing devices 105 such as a portable player, a mini-compo and a car stereo, he or she has to carry the SD card 104 containing the recorded content data with himself or herself and set the SD card 104 in the general-purpose reproducing device 105 every time, which is inconvenient. In addition, the method described above has a disadvantage that copying even up to the predetermined number of times is costly and the method therefore would not become popular easily since the SD itself is relatively expensive.

In this manner, such a copyright management system above has an aspect that the ease of use for users is sacrificed while a content distributor is strongly protected.

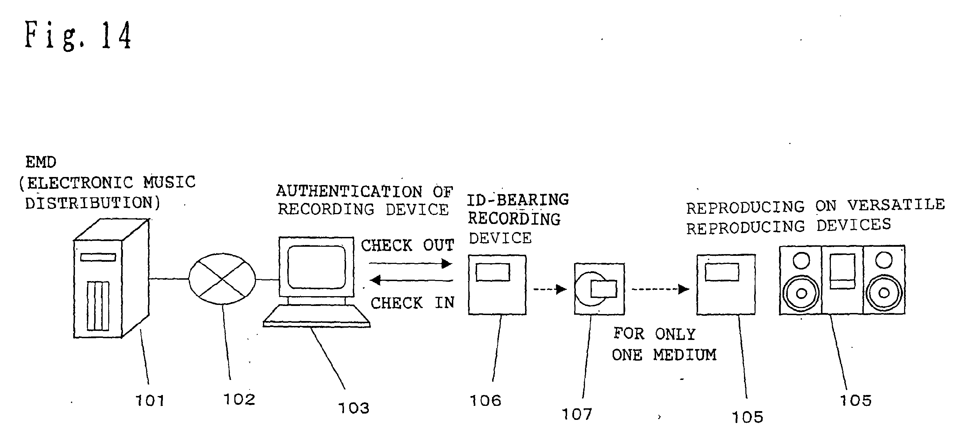

Fig. 14 shows a method which uses an MD 107 which is a versatile medium instead of using the SD card 104. A system shown in Fig. 14 is different from the system shown in Fig. 13 in that the MD 107 is checked in and out to the personal computer 103 via an ID-bearing recording device 106. In short, in order to load desired content data in the MD 107, the personal computer 103 authenticates the ID-bearing recording device 106 and confirms that the ID-bearing recording device 106 has an ID which has been authenticated in advance, and the desired content data are then checked out from the personal computer 103 to the MD 107 through the ID-bearing recording device 106.

This kind of system can use the MD 107 which is inexpensive and hence a cost of making a plurality of copies is less expensive than where the same copying is done using the SD card 104. However, since a check-in and a check-out of the ID-bearing recording device 106 to the personal computer 103 require authentication, encoding and other necessary procedure for every data transmission, the ID-bearing recording device 106 needs to comprise a high-performance processing circuit. Further, authentication and encoding imposes a heavy load, which results in inconvenience to a user.

### SUMMARY OF THE INVENTION

In consideration of the above problems, an object of the present invention is to provide a copyright protection system, a copyright protection method, a host apparatus for the same, a program for the same, and a medium carrying such a program, all of which are convenient for a user to use.

To solve the above problem, a first invention of the present invention is a host apparatus which encodes a predetermined content by a predetermined encoding method, selects a particular reproducing device (5) in accordance with the number of reproducing devices (5) which are permitted to reproduce and sends, to said particular reproducing device (5) thus selected, decoding information (7) which is for decoding said encoded content (6).

A second invention of the present invention is the host apparatus of the first invention of the present invention, further comprising selection instructing means which instructs said selection.

A third invention of the present invention is the host apparatus of the first invention of the present invention, wherein said encoding uses a host ID which is peculiar to said host apparatus, and
said decoding information (7) contains a device ID of said particular reproducing device (5) and said host ID.

A fourth invention of the present invention is the host apparatus of the first invention of the present invention, wherein said predetermined content and said information (38) regarding the number of devices are distributed from a distributing server (1) after encoded.

Inventions made by the inventor will now be described.

A fifth invention is directed to a reproducing device which reproduces an encoded content (6) encoded by a host apparatus under a condition that a host ID of said encoded content (6) matches with a host ID which is contained in said decoding information (7) and a device ID contained in said decoding information (7) matches with a peculiar device ID, wherein said host apparatus encodes a predetermined content using a peculiar host ID, selects a particular reproducing device (5) in accordance with the number of reproducing devices which are permitted to reproduce, and sends, to said particular reproducing device thus selected, decoding information (7) which contains a device ID identifying said particular reproducing device (5) and said host ID which are for decoding said encoded content (6).

A sixth invention is directed to the reproducing device according to the fifth invention which is not connected to the Internet.

A seventh invention is directed to a copyright management system, comprising:
a distributing server (1) which distributes a predetermined content;
a host apparatus (3) which encodes a predetermined content by a predetermined encoding method; and
a reproducing device (5) which reproduces said encoded content,
wherein said host apparatus (3) selects a particular reproducing device (5) in accordance with the number of reproducing devices which are permitted to reproduce and sends decoding information (7) which is for decoding said encoded content (6) to said reproducing device thus selected,
and said reproducing device (5) reproduces said encoded content (6) utilizing said decoding information (7) thus received.

An eighth invention is directed to a copyright management method using a copyright management system which comprises: a distributing server (1) which distributes a predetermined content; a host apparatus (3) which encodes said predetermined content (1) by a predetermined encoding method; and a reproducing device (5) which reproduces said encoded content,
wherein said host apparatus (3) selects a particular reproducing device (5) in accordance with the number of reproducing devices which are permitted to reproduce and sends decoding information (7) which is for decoding said encoded content (6) to said reproducing device thus selected,
and said reproducing device (5) reproduces said encoded content (6) utilizing said decoding information (7) thus received.

A ninth invention is directed to a program which makes said host apparatus (3) which encodes a predetermined content by a predetermined encoding method and said reproducing device (5) which reproduces said encoded content (6) of the copyright management system according to the seventh invention function as a computer.

A tenth invention is directed to a recording medium which can be used on a computer and carries the program according to the ninth invention.

### BRIEF DESCRIPTION OF THE DRAWINGS

Fig. 1 is a drawing which shows an overview of a copyright management system according to a preferred embodiment of the present invention;
Fig. 2 is a drawing which shows an overview of operations of the copyright management system according to the preferred embodiment of the present invention;
Fig. 3 is a block diagram which shows a structure of a personal computer which forms the copyright management system according to the preferred embodiment of the present invention;
Fig. 4 is a block diagram which shows a structure of a reproducing device which forms the copyright management system according to the preferred embodiment of the present invention;
Fig. 5 is a schematic diagram which shows overall operations of the copyright management system according to the preferred embodiment of the present invention;
Fig. 6 is a flow chart which shows the overall operations of the copyright management system according to the preferred embodiment of the present invention;
Fig. 7 is a flow chart which shows operations of the personal computer which forms the copyright management system according to the preferred embodiment of the present invention;
Fig. 8 is a flow chart which shows operations of the reproducing device which forms the copyright management system according to the preferred embodiment of the present invention;
Fig. 9 is a schematic diagram which shows overall operations of the copyright management system according to the preferred embodiment of the present invention;
Fig. 10 is a drawing which shows various types of copyrights which are protected by the copyright management system according to the preferred embodiment of the present invention;
Fig. 11 is a drawing which shows various types of copyrights which are protected by the copyright management system according to the preferred embodiment of the present invention;
Fig. 12 is a flow chart which shows operations for changing the number of reproducing devices which are permitted to reproduce and which form the copyright management system according to the preferred embodiment of the present invention;
Fig. 13 is a schematic diagram of a conventional copyright management system; and
Fig. 14 is a schematic diagram of a conventional copyright management system.

### (EXPLANATION OF THE REFERENCE SYMBOLS)

- 1: EMD server
- 2: Internet line
- 3, 43: personal computer
- 4: CD-R
- 5: reproducing device
- 6: encoded content
- 7: decoding key
- 8: decoding means
- 9: content encoding means
- 10: recording means
- 11: key acquiring means
- 12: key management information database
- 13: key management information controlling means
- 14: own ID holding means
- 15: own ID acquiring means
- 16: encoding-ID decoding ID generating means
- 17: decoding key generating means
- 18: decoding key issuing means
- 19, 22, 26: communicating means
- 20: device ID acquiring means
- 21: decoding key deleting means
- 23: content acquiring means
- 24: medium drive
- 25: encoding ID extracting means
- 27: decoding key holding means
- 28: decoding key acquiring means
- 29: encoding ID, decoding ID comparing means
- 30: device ID extracting means
- 31: device ID holding means
- 32: device ID acquiring means
- 33: device ID comparing means
- 34: reproducing permission judging means
- 35: decoding processing means
- 36: outputting means
- 37: decoding ID extracting means
- 38: key

### BEST MODE FOR IMPLEMENTING THE INVENTION

A preferred embodiment of the present invention will now be described with reference to associated drawings.

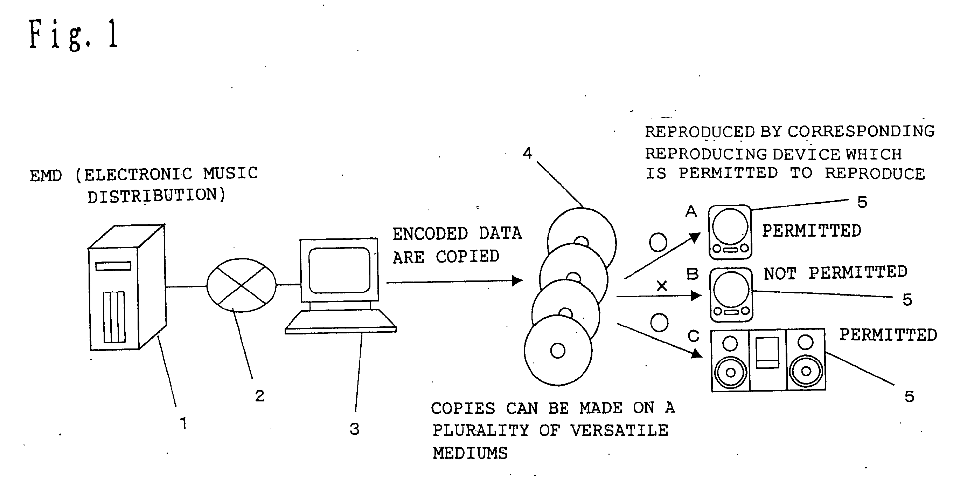

Fig. 1 is a drawing which shows an overview of a copyright management system according to the present invention. In Fig. 1, denoted at 1 is an electronic music distributing (EMD) server, denoted at 2 is an Internet line, denoted at 3 is a personal computer having a predetermined host ID which is an example of a host apparatus according to the present invention, denoted at 4 are CD-Rs, and denoted at 5 are reproducing devices having predetermined individual device IDs which are an example of a reproducing device according to the present invention and which are not connected to the Internet line 2. Shown as the reproducing devices 5 in Fig. 1 are a device A, a device B and a device C. and in the illustrated state, the device A and the device C are permitted to reproduce while the device B is not permitted to reproduce. Further, each reproducing device 5 has such a structure which permits a connection with a personal computer 3 via a telecommunication cable.

An overview of an operation of such a copyright management system will now be described. First, a user downloads content data to his or her personal computer 3 from the EMD server 1 on the Internet line 2. The personal computer 3 encodes the downloaded content data by a predetermined method and copies this to the CD-R 4. At this stage, the personal computer 3 may copy to the plurality of CD-Rs 4, or one CD-R 4 thus created may be copied on the plurality of CD-Rs 4. The user inserts the CD-R 4 in the device A or the device C which is a predetermined reproducing device 5. The device A or the device C permitted to reproduce can reproduce a desired content. Even if the user inserts the CD-R 4 in the device B which is not permitted to reproduce, it is not possible to reproduce the desired content. The copyright management system according to the present invention is thus characterized in that content data copied on the CD-Rs 4 which are a versatile medium can be reproduced only with the reproducing devices 5 which have been permitted in advance to reproducing.

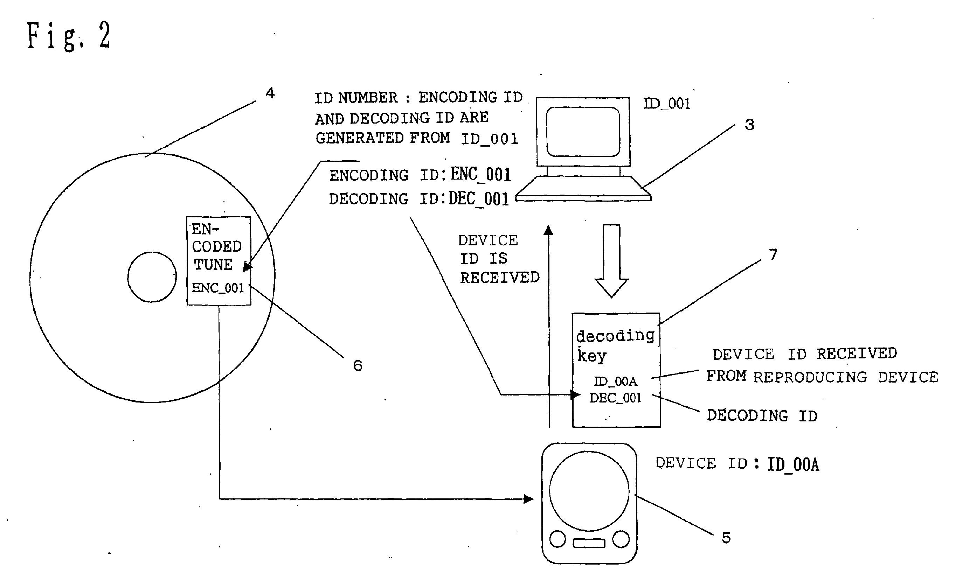

Fig. 2 shows an overview of an operation that content data can be reproduced only with predetermined reproducing devices 5. The personal computer 3 has ID001 as a host ID. The reproducing device 5 has IDOOA as a device ID. The personal computer 3 encodes desired content data by a predetermined method on the CD-R 4 and assigns ENC001 which is an encoding ID which uses the host ID. In other words, an encoded content 6 containing ENC001 is recorded on the CD-R 4. In the meantime, the personal computer 3 generates a decoding key 7 which is an example of decoding information according to the present invention. The decoding key 7 has DEC001 which is a decoding ID generated using the host ID for decoding of the encoded content and IDOOA which is the device ID of the reproducing device 5. The decoding key 7 is then sent to the reproducing device 5 from the personal computer 3.

The user inserts the CD-R 4 now holding the encoded content in the reproducing device 5. The reproducing device 5 verifies whether ENC001 which is contained in the encoded content corresponds to DEC001 which is contained in the decoding key. The reproducing device 5 further verifies whether device IDOOA which is contained in the decoding key 7 matches with device ID00A which is the device ID peculiar to the reproducing device 5. During these two verifications, when the IDs correspond and match, the reproducing device 5 decodes the encoded content which is included in the CD-R 4, thereby reproducing the desired content.

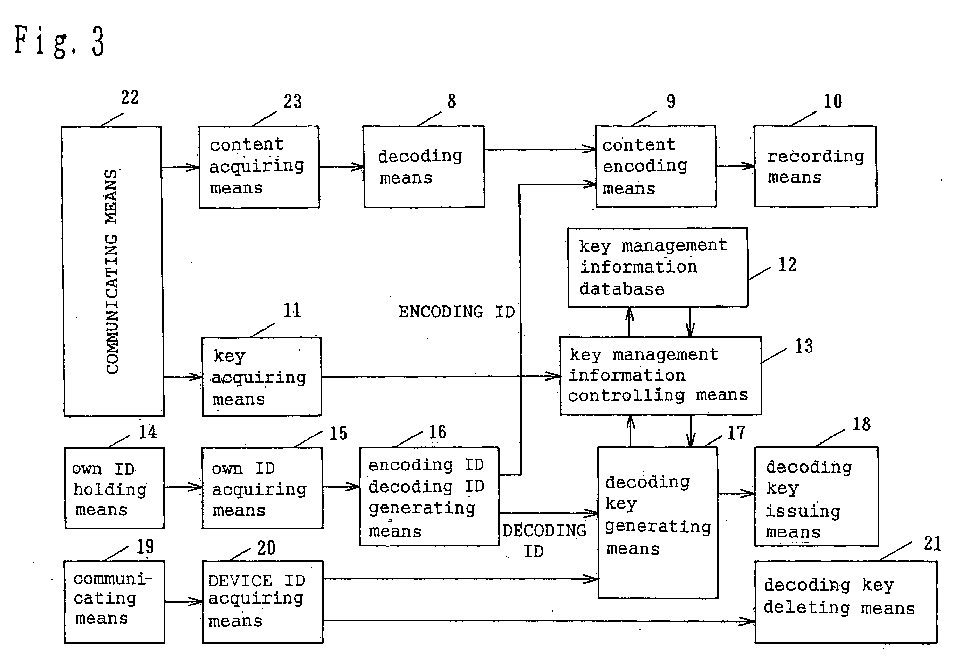

Fig. 3 is a block diagram which shows an example of a structure of the personal computer 3. Denoted at 22 is communicating means which receives on the Internet line 2 a content which has been encoded by a general encoding method in the EMD server 1 and has been distributed, denoted at 23 is content acquiring means which acquires the encoded content from the communicating means 22, denoted at 8 is decoding means which decodes the encoded content thus acquired by a general decoding method, denoted at 9 is content encoding means which encodes a decoded content while using an encoding ID, and denoted at 10 is recording means which records an encoded content on the CD-R 4.

Denoted at 14 is own ID holding means which holds a host ID, denoted at 15 is own ID acquiring means which acquires a host ID from the own ID holding means 14, denoted at 16 is encoding-ID decoding ID generating means which generates an encoding ID and a decoding ID from an acquired host ID, denoted at 17 is decoding key generating means which generates a decoding key using an ID generated by the encoding-ID decoding ID generating means 16 and an ID generated by device ID acquiring means 20, and denoted at 18 is decoding key issuing means which issues a decoding key generated by the decoding key generating means 17 to the reproducing device 5.

Denoted at 11 is key acquiring means which acquires device count information 38 (which will be described later) from 1 via the communicating means 22, denoted at 13 is key management information controlling means, and denoted at 12 is a key management information database.

Denoted at 19 is communicating means which communicates with the reproducing devices 5, denoted at 20 is device ID acquiring means which acquires device IDs from the reproducing devices 5 via the communicating means 19, and denoted at 21 is decoding key deleting means which deletes decoding keys issued to the reproducing devices 5.

The encoding-ID decoding ID generating means 16, the decoding key generating means 17, the decoding key issuing means 18 and the decoding key deleting means 21 correspond to an example of selection instructing means of the present invention.

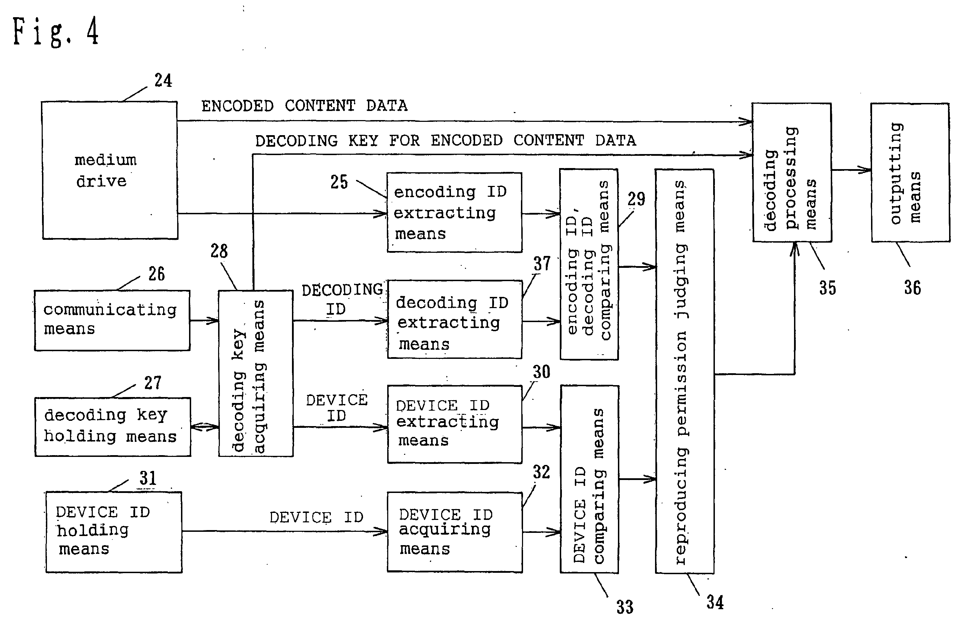

Fig. 4 is a block diagram which shows an example of a structure of the reproducing device 5. In Fig. 4, denoted at 24 is a medium drive which drives the CD-Rs 4, denoted at 25 is encoding ID extracting means which extracts an encoding ID from a content recorded on the CD-R 4 which is set to the medium drive 24, denoted at 26 is communicating means which communicates with the personal computers 3, denoted at 27 is decoding key holding means which holds the decoding key 7 issued by the personal computer 3, denoted at 28 is decoding key acquiring means which acquires the decoding key 7 from the communicating means 26 or the decoding key holding means 27, denoted at 37 is decoding ID extracting means which extracts a decoding ID from the decoding key acquiring means 28, denoted at 30 is device ID extracting means which extracts a device ID from the decoding key 7 acquired by the decoding key acquiring means 28, denoted at 31 is device ID holding means which holds a device ID which is peculiar to each reproducing device 5, and denoted at 33 is device ID comparing means which compares a device ID acquired by the device ID acquiring means 32 with a device ID extracted by the device ID extracting means 30.

Denoted at 34 is reproducing permission j udging means which determines, from comparison results obtained by encoding ID, decoding ID comparing means 29 and the device ID comparing means 33, whether it is possible to reproduce a desired content with the reproducing device 5, denoted at 35 is decoding processing means which decodes encoded content data supplied from the medium drive 24 based on the judging result by the reproducing permission judging means, and denoted at 36 is outputting means which outputs and accordingly reproduces a content decoded by the decoding processing means 35.

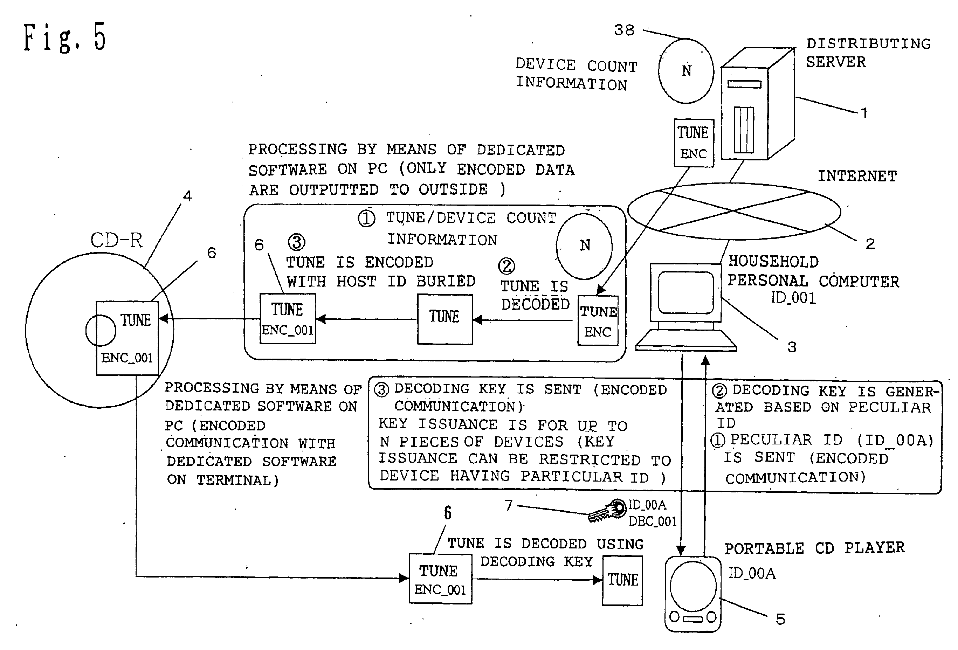

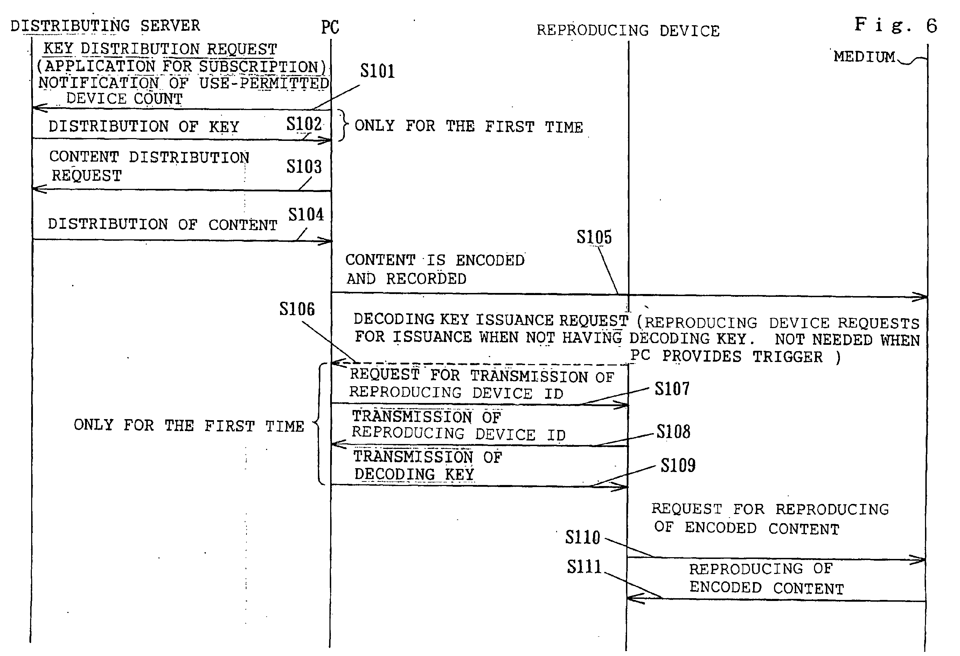

A detailed operation of the copyright management system according to the present invention which has such a structure as above will now be described with reference to Figs. 5 and 6. Fig. 5 is a drawing for describing an overall operation of the copyright management system. Fig. 6 is a flow chart which shows the copyright management system as a whole.

First, a user requests for distribution of the device count information 38 on the Internet line 2. That is, the user requests the EMD server 1 for subscription for a service (Step 101). This request includes information representing a reproducing-permitted device count of the reproducing devices 5 which a user wishes for. When the user subscription is to be accepted, the EMD server 1 distributes the device count information 38 on the Internet line 2 (Step 102). The device count information 38 contains a reproducing-permitted device count for each user who wishes for subscription.

When a user wishes for distribution of a content, his or her personal computer 3 transmits a distribution request for a desired content to the EMD server 1 on the Internet line 2 (Step 103). Receiving the content distribution request, the EMD server 1 transmits to the personal computer 3 on the Internet line 2 the device count information 38 and content data obtained by encoding the content wanted by the user by a general encoding method (Step 104). The personal computer 3, upon receipt of the encoded content data and the device count information 38, decodes the encoded content data and the device count information 38 by a general decoding method.

As the user sets the CD-R 4 in the personal computer 3 and manipulates in a predetermined manner, the personal computer 3 encodes the decoded content using the host ID and records the content on the CD-R 4 (Step 105).

When the user wishes to reproduce the CD-R 4 which carries thus encoded content with the reproducing device 5, the reproducing device 5 requests for issuance of the decoding key 7 first (Step 106). When the reproducing device 5 already has the decoding key 7 or when the personal computer 3 triggers the reproducing device 5, the step 106 is not necessary.

Receiving the request for issuance of the decoding key 7 from the reproducing device 5, the personal computer 3 transmits to the reproducing device 5 a request for transmission of the device ID of the reproducing device 5 (Step 107). Upon receipt of the request for transmission of the device ID, the reproducing device 5 transmits its peculiar device ID to the personal computer 3 (Step 108). The personal computer 3 then generates the decoding key 7 from DEC001 which is a decoding ID generated from the host ID peculiar to the personal computer 3 and IDOOA which is the device ID peculiar to the reproducing device 5. The personal computer 3 thereafter transmits thus generated decoding key 7 to the reproducing device 5 (Step 109).

When the user wishes to reproduce a desired content on the reproducing device 5, the reproducing device 5 transmits to the CD-R4 a request for reproducing of an encoded content (Step 110). The reproducing device 5 compares ENC001 which is recorded in the encoded content 6 held in the CD-R 4 with DEC001 which is contained in the decoding key 7 sent from the personal computer 3, and verifies that the two correspond to each other. That is, 001s in the two which are the host ID are verified to match. Further, the reproducing device 5 verifies whether IDOOA which is the device ID contained in the decoding key 7 matches with IDOOA which is the device ID peculiar to the reproducing device 5. When confirming that the both conditions above are met, the reproducing device 5 decodes the encoded content 6 and reproduces the desired content (Step 111).

In Fig. 5, enclosed in the box in a central area is processing realized with dedicated software for data transfer between the EMD server 1 and the personal computer 3. Enclosed in the box in a bottom right-hand side area in Fig. 5 is processing realized with dedicated software for data transfer between the reproducing device 5 and the personal computer 3. As for these dedicated software, since the processing is executed while protecting data such as a key against an access from outside, information which is sent and received will not be leaked out to outside.

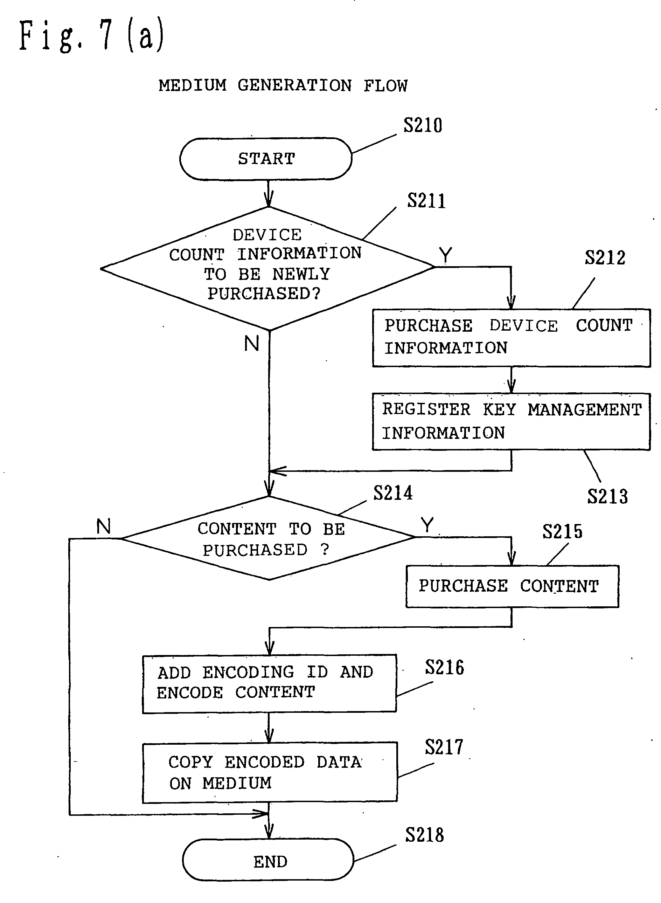

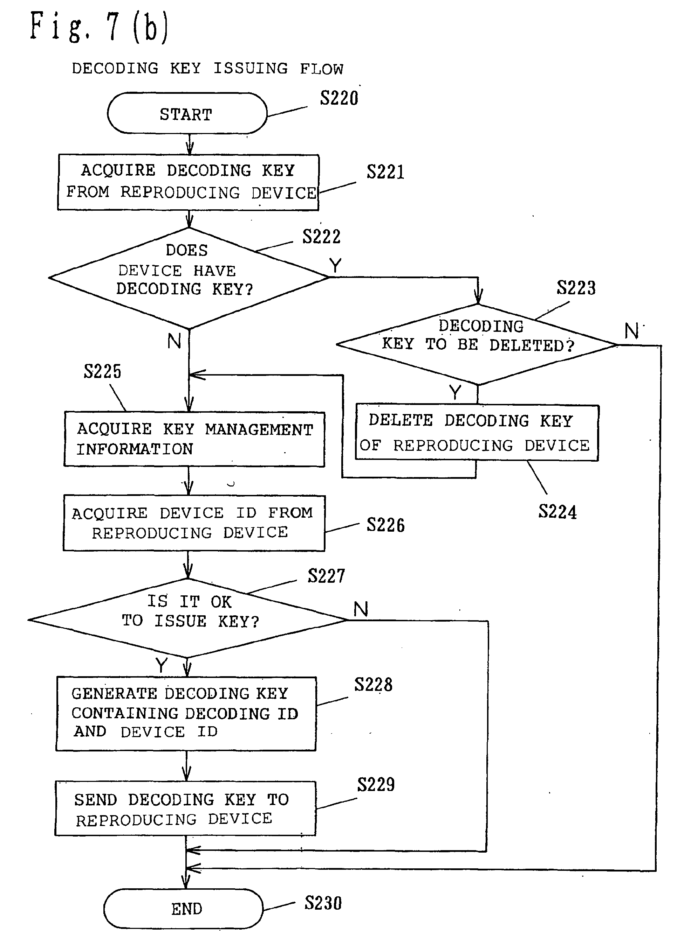

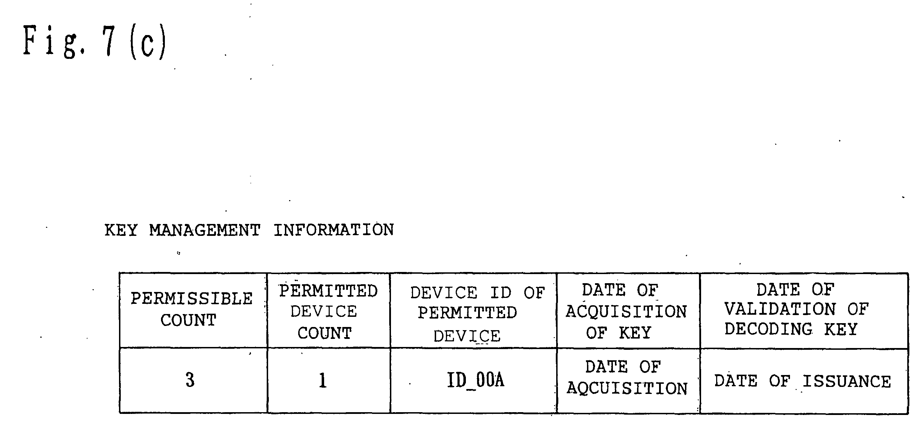

Fig. 7 is a flow chart for describing operations of the personal computer 3 in the copyright management system described above. Operations of the personal computer 3 will now be described with reference to Figs. 3 and 7.

Fig. 7 (a) shows a flow for copying of desired content data to the CD-R 4. First, a user starts up his or her personal computer 3 (Step 210). The personal computer 3 then encourages the user to determine whether to newly purchase the device count information 38 (Step 211). When the user decides to purchase the device count information 38, the personal computer 3 executes processing to purchase the device count information 38 (Step 212), and the key management information controlling means 13 of the personal computer 3 registers key management information in the key management information database 12 (Step 213). In the event that there is already the device count information 38 available and it is not necessary to newly purchase the information, the process proceeds to the next step.

As the key management information is registered at the step 213, the personal computer 3 encourages the user to determine whether to purchase a content (Step 214). When the user decides to purchase a content, the content acquiring means 23 of the personal computer 3 executes processing to purchase the content through the communicating means 22 (Step 215). When the user decides not to purchase a content, the personal computer 3 terminates the processing (Step 218). As the content purchasing processing completes at the step 215, the decoding means 8 decodes the encoded content by a general decoding method. The content encoding means 9 encodes the content using an encoding ID generated by the encoding-ID decoding ID generating means 16 (Step 216) , the recording means 10 copies the encoded content to the CD-R 4 (Step 217), and the processing ends (Step 218).

Fig. 7(b) shows a flow to be followed when the personal computer 3 generates the decoding key for a reproducing device 5 which is permitted to reproduce. First, the personal computer 3 starts processing of issuing a decoding key (Step 220). The personal computer 3 then issues an instruction to acquire the decoding key 7 from the reproducing device 5 (Step 221). Next, the personal computer 3 verifies whether the reproducing device 5 has the decoding key 7 (Step 222). When the reproducing device 5 already has the decoding key 7, the personal computer 3 determines whether to delete the decoding key 7 (Step 223). When the decoding key 7 is not to be deleted, the processing is terminated (Step 230). When the reproducing device 5 does not have the decoding key 7, the personal computer 3 proceeds to the next step. At the next step, the key management information controlling means 13 acquires key management information from the key management information database 12 (Step 225), and transfers the key management information to the decoding key generating means 17.

Meanwhile, the device ID acquiring means 20 acquires the device ID from the reproducing device 5 via the communicating means 19 (Step 226), and the decoding key generating means 17 determines whether issuance of the decoding key 7 is appropriate (Step 227). If issuance of the decoding key 7 is not appropriate, the processing is terminated (Step 230). When issuance of the decoding key 7 is appropriate, the decoding key generating means 17 generates the decoding key 7 from a decoding ID obtained from the encoding-ID decoding ID generating means 16 and the device ID acquired from the reproducing device 5 (Step 228). The decoding key issuing means 18 transmits the decoding key 7 to the reproducing device 5 (Step 229) , and the processing is terminated (Step 230).

Fig. 7(c) shows an example of key management information which is stored in the key management information database 12. This key management information represents a state that a user has obtained a reproducing -permitted device count of 3 from the EMD server 1 and that the decoding key 7 has been issued for one of the reproducing devices 5 whose ID is IDOOA. In addition, the date of acquisition of the key and the date of issuance of the decoding key 7 are recorded in this key management information.

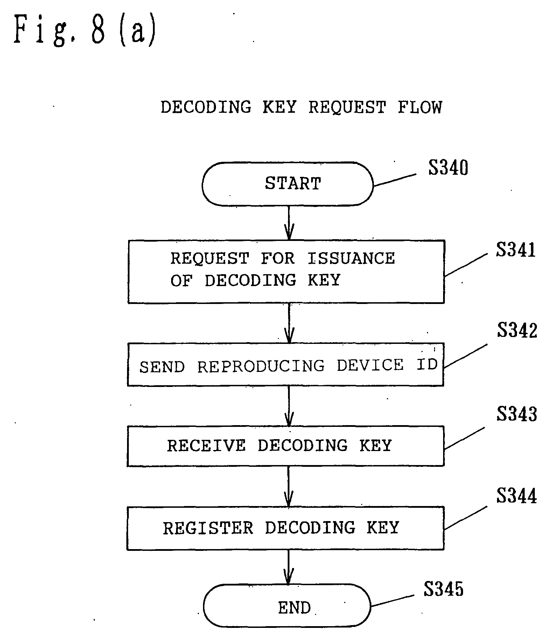

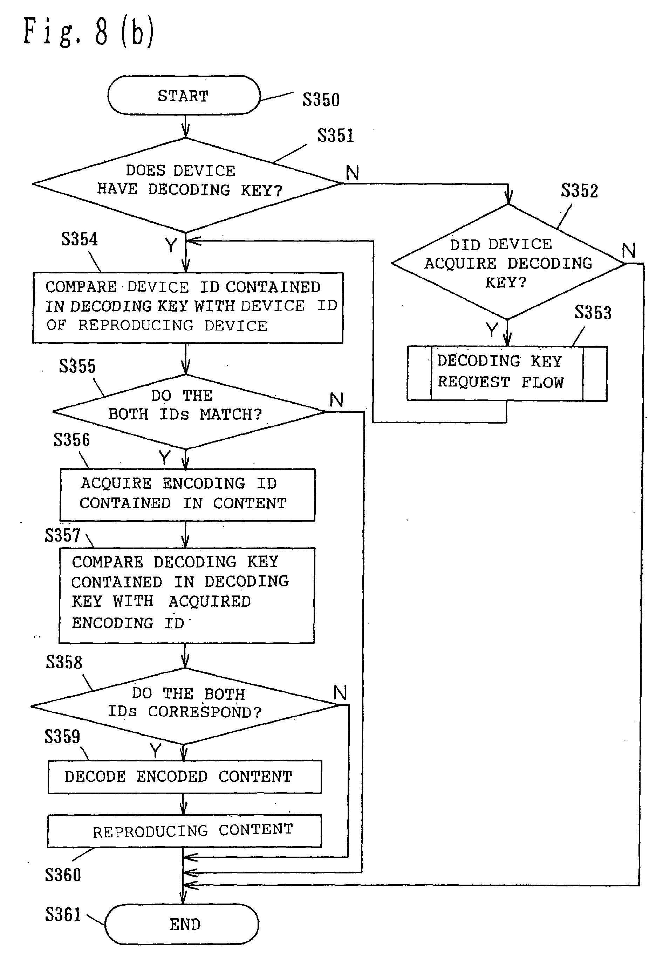

Fig. 8 shows a processing flow in the reproducing device 5. Steps 341 through 344 shown in Fig. 8(a) correspond to steps 106 through 109 shown in Fig. 6. A flow of operations performed by the reproducing device 5 will now be described with reference to Figs. 8 and 4.

In Fig. 8 (a) , first, the reproducing device 5 starts processing of requesting for a decoding key (Step 340). The communicating means 26 transmits a request for issuance of the decoding key 7 to the personal computer 3 (Step 341) . As the personal computer 3 requests for transmission of the device ID of the reproducing device 5, the decoding key acquiring means 28 transmits the device ID held in the device ID holding means 31 to the personal computer 3 via the communicating means 26 (Step 342). As the personal computer 3 issues the decoding key, the communicating means 26 receives the issued decoding key 7 (Step 343), the decoding key acquiring means 28 registers the acquired decoding key 7 in the decoding key holding means 27 (Step 344), and the processing is terminated (Step 345).

Fig. 8(b) is a flow chart of operations for reproducing a content on the reproducing device 5.

First, in response to a user's operations, the reproducing device 5 starts processing of reproducing a content (Step 350). The decoding key acquiring means 28 confirms whether the decoding key holding means 27 has the decoding key 7 (Step 351). When the decoding key holding means 27 does not have the decoding key 7, the process proceeds to a step of determining whether to acquire the decoding key 7 (Step 352). When it is determined at the step 352 not to acquire the decoding key 7, the processing is terminated (Step 361), whereas when the decoding key 7 is to be acquired, the process proceeds to a decoding key requesting flow which is shown in Fig. 8 (a) (Step 353). When the decoding key holding means 27 has the decoding key 7, the device ID contained in the decoding key 7 is compared with the device ID of the reproducing device 5 (Step 354). In short, the device ID extracting means 30 extracts the device ID from the decoding key 7 which is present in the decoding key acquiring means 28, and transfers the device ID to the device ID comparing means 33. Meanwhile, the device ID acquiring means 32 acquires the peculiar device ID which is present in the device ID holding means 31, and transfers the device ID to the device ID comparing means 33. The device ID comparing means 33 then compares the device ID received from the device ID extracting means 30 with the device ID received from the device ID acquiring means 32 to tell whether the two match with each other (Step 355). When the two device IDs fail to match with each other, the processing is terminated (Step 361).

When the two device IDs match with each other, the encoding ID extracting means 25 acquires an encoding ID contained in a content from the medium drive 24 (Step 356), and transfers the same to the encoding ID, decoding ID comparing means 29. Meanwhile, the decoding ID extracting means 37 extracts a decoding ID from the decoding key 7 which is present in the decoding key acquiring means 28, and transfers the decoding ID to the encoding ID, decoding ID comparing means.29. The encoding ID, decoding ID comparing means 29 then compares the encoding ID acquired from the encoded content with the decoding ID contained in the decoding key 7 (Step 357). In short, the encoding ID, decoding ID comparing means 29 compares the encoding ID with the decoding ID and verifies whether the two correspond to the same host ID (Step 358).

In the event that the encoding ID and the decoding ID above do not correspond, the reproducing permission judging means 34 determines that it is not possible to reproduce, and the processing is terminated (Step 361). When the two IDs correspond, the reproducing permission judging means 34 determines that it is possible to reproduce, the decoding processing means 35 decodes the encoded content 6 using the decoding key 7 (Step 359), the outputting means 36 outputs the decoded content thereby reproducing the content desired by the user (Step 360), and the processing is terminated (Step 361).

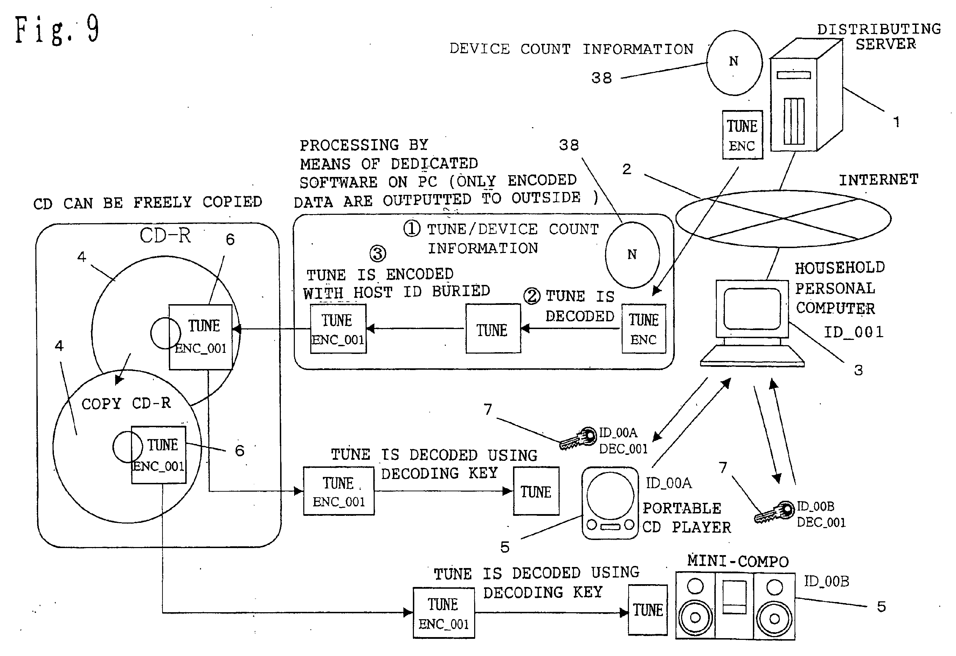

Fig. 9 is a schematic diagram which shows the entire copyright management system of the present invention as it is when there are a plurality of reproducing devices 5 which are permitted to reproduce. In the example shown in Fig. 9, two out of the reproducing devices 5, namely, the device A which is a portable CD player and the device B which is a mini-compo are permitted to reproduce. In such a case, the personal computer 3 generates the decoding key 7 which contains DEC001 as a decoding ID and IDOOA as a device ID for the device A, and the decoding key 7 which contains DEC001 as a decoding ID and 00B as a device ID for the device B. These decoding keys 7 are sent respectively to the device A and the device B.

In order to reproduce the encoded content 6 on the device A and the device B, the CD-R 4 is copied twice in the personal computer 3. At this stage, the same encoded content 6 is recorded on each CD-R 4. That is, stored in the encoded content 6 are the same encoded content data and ENC001 which serves as an encoding key.

The device A and the device B each decode the encoded content 6 using each decoding key 7, whereby the desired content 6 is reproduced.

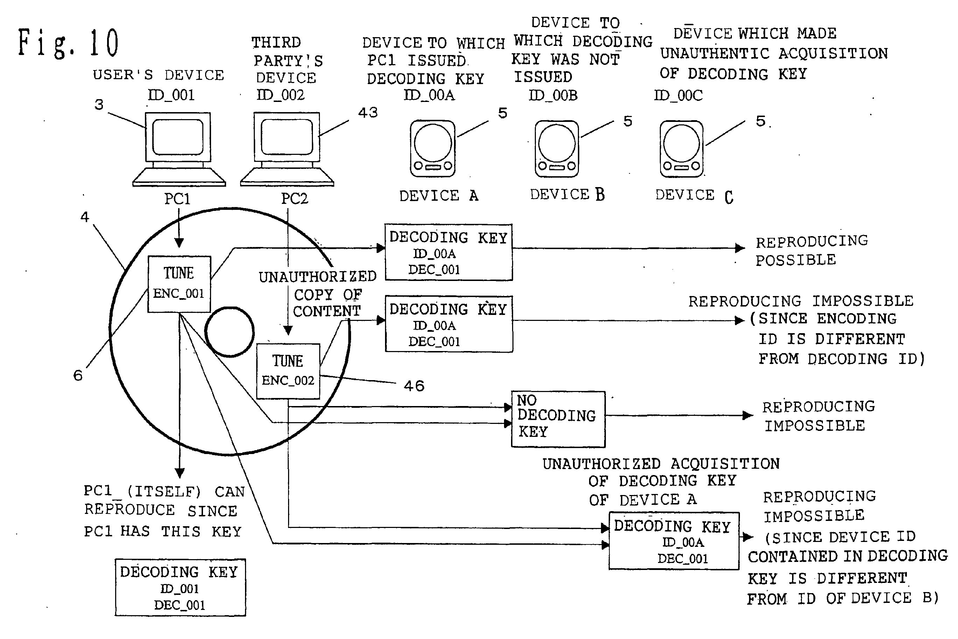

Fig. 10 is a drawing which shows various types of copyrights which are protected by the copyright management system according to the present invention which has such a structure and performs such operations as described above.

Illustrated in Fig. 10 is an instance that there is a personal computer 43 which is different from the personal computer 3, as a host apparatus. In addition, there are three devices which serve as reproducing devices 5 , namely, a device A, a device B and a device C, and it is the device A that is the reproducing device 5 to which the personal computer 3 has issued the decoding key 7.

In such a condition described above, an example will now be described in which one has obtained an unauthorized CD-R on which a content has been recorded using the personal computer 43 which is a third party's personal computer. In this example, using ID002 which is a host ID of the personal computer 43, the personal computer 43 encodes a content on the CD-R 4 which has been inserted in the personal computer 43, and therefore, thus encoded content 46 contains ENC002 as an encoding key. As a user tries to reproduce a desired content on the device A, when the CD-R 4 contains the encoded content 46, that is, when ENC002 is present in the encoded content 46, the device A compares DEC001 which is a decoding ID contained in the decoding key 7 of the device A and ENC002 which is contained in the encoded content 46 and confirms that the two do not originate in the same host ID. Hence, the device A can not reproduce the content which was recorded on the unauthorized CD-R using the personal computer 43.

Next, in the event that the decoding key 7 has not been issued to the device B, the device B can of course reproduce neither a content which was copied using the personal computer 3 nor a content which was copied using the personal computer 43.

Next, it is assumed that the device C either does not have the authentic decoding key 7 but has an unauthorized copy of the decoding key 7 of the device A. In this case, since the device ID peculiar to the device C is IDOOC and the device ID which is present within the unauthorized copy of the decoding key 7 is IDOOA, the device C determines that the two device IDs fail to match with each other. Owing to this, the device C to which the decoding key 7 was copied in an unauthorized manner can not reproduce a desired content. Of course, it is not possible to reproduce an unauthorized copy of a content which was made on the personal computer 43.

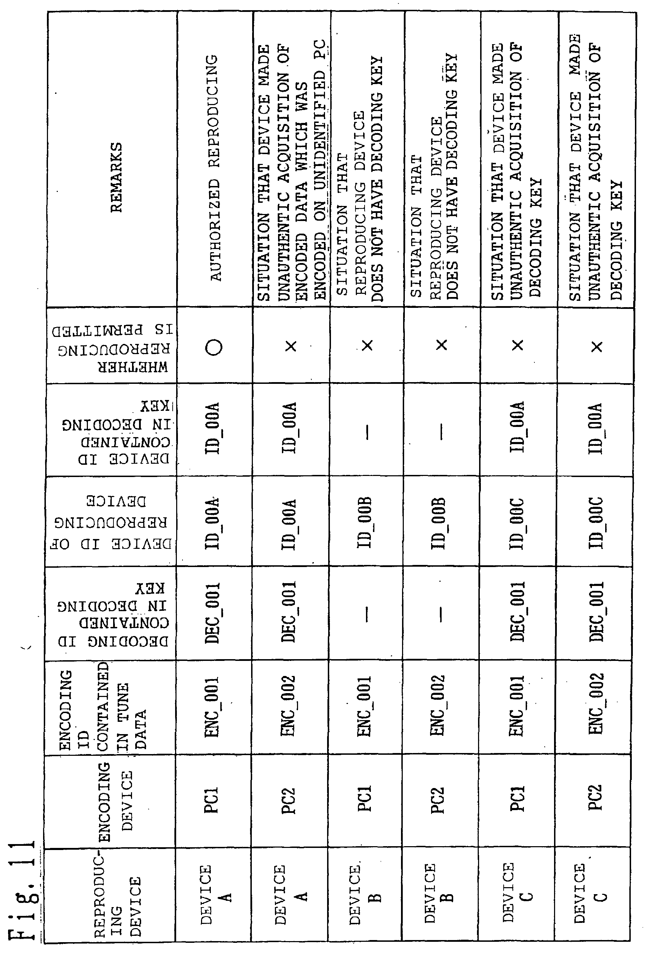

Fig. 11 shows a list of scopes of protection of copyrights in the conditions described above. In other words, the reproducing device can reproduce a content desired by a user only when the reproducing device 5 is a device which is permitted to reproduce and which has the authentic decoding key 7, and the CD-R 4 has been copied using the user's authentic personal computer 3. However, if the reproducing device 5 is a device which does not have the decoding key 7 and if the reproducing device 5 is a device for which an unauthorized copy of the decoding key 7 has been made, the reproducing device 5 can not reproduce such a content.

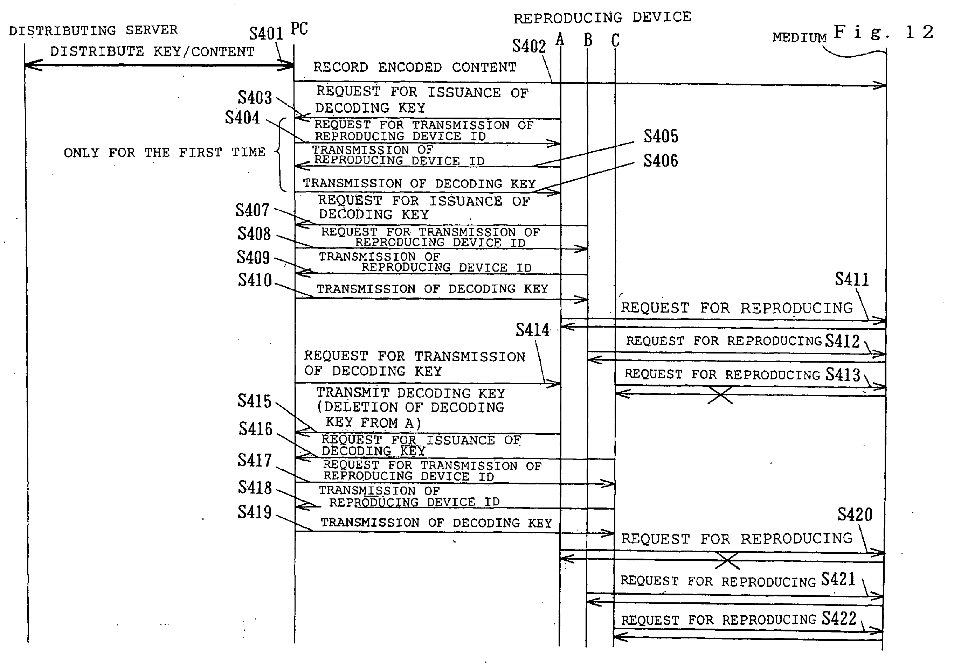

Fig. 12 shows a flow for changing the reproducing devices 5 which are permitted to reproduce without changing a reproducing-permitted device count of the reproducing devices 5.

For example, it is assumed that a user has three reproducing devices 5, namely, a device A, a device B and a device C, and the device A and the device B are permitted to reproduce. In relation to an example that reproducing-permitted devices are changed from the device A and the device B to the device B and the device C without changing a reproducing-permitted device count which is 2 for this user, operations of the copyright management system according to the preferred embodiment of the present invention for such an example will now be described.

In Fig. 12, a step 401 corresponds to the steps 101 through 104 which are shown in Fig. 6. A step 402 corresponds to the step 105 which is shown in Fig. 6, while steps 403 through 406 correspond to the steps 106 through 109 which are shown in Fig. 6. Steps 407 through 410 denote operations at the steps 403 through 406 performed between the personal computer 3 and the device B. With these operations already executed, the device A and the device B can reproduce a content desired by a user (Step 411, Step 412). However, the device C which does not have the decoding key 7 can not reproduce the content (Step 413).

Next, the personal computer 3 requests the device A to transmit the decoding key 7 which the device A has (Step 414). Receiving the request for transmission of the decoding key 7 from the personal computer 3, the device A transmits the decoding key 7 which the device A has to the personal computer 3, whereby the decoding key 7 is deleted from the device A (Step 415). Further, in the personal computer 3, too, the decoding key deleting means 21 deletes the received decoding key 7 of the device A (Step 224 (Fig. (b)).

At the steps 416 through 419, processing similar to that at the steps 403 through 406 is performed between the device C and the personal computer 3, so that the decoding key 7 is sent to the device C. As a result, the device A can not reproduce the predetermined content (Step 420), whereas the device B and the device C can reproduce the desired content (Step 421, Step 422).

As described above, the copyright management system according to the preferred embodiment permits to make a plurality of copies of a desired content on the versatile CD-R 4, and hence, for reproducing on a plurality of reproducing devices such as a portable player, a mini-compo, a car stereo and the like, it is possible to set each CD-R 4 to each reproducing device 5, thereby avoiding a trouble of carrying the CD-Rs 4.

The copyright management system according to the preferred embodiment does not restrict copying of the CD-Rs 4, but restricts the number of reproducing devices 5 which are to reproduce, whereby the convenience for users is improved while protecting copyrights.

Further, the EMD server 1 does not have to manage licenses for each one of the reproducing devices 5 but instead only needs to manage a use-permitted device count of the reproducing devices 5, and therefore, the EMD server 1 may have a simple system structure.

Further, since the decoding key 7 which is for decoding of a desired content is issued by a user's personal computer 3, the user does not have to make an inquiry to the EMD server 1 each time but can enjoy a desired content through a simple procedure.

While the foregoing is related to the copyright management system according to the present invention, a copyright management method which utilizes a system which has such a structure above is also within the scope of the present invention.

Further, while the foregoing described that the EMD server 1 distributes the device count information 38 to the personal computer 3 at the step 101 via the Internet line 2, the device count information 38 may be sent or delivered by other method such as a postal mail service.

Further, while the foregoing described that the personal computer 3 and the reproducing device 5 are connected via a telecommunication cable and transfer the decoding key 7 with each other, the personal computer 3 and the reproducing device 5 may be connected wireless instead of using a wired connection. In addition, the decoding key 7 is transferred or otherwise appropriately handled using a physical medium such as a CD-R. In this case, a transfer of the decoding key 7 between the personal computer 3 and the reproducing device 5 is not "transmission or reception" but is an operation of sending or receiving. An effect similar to the above is attained in such a case, too.

Further, while the foregoing described that a medium on which an encoded content is recorded is a CD-R, this medium may of course be other medium.

Further, while the foregoing described that the personal computer 3 issues the decoding key 7 to a reproducing-permitted number of the reproducing devices 5 or fewer reproducing devices 5, the personal computer 3 may further have a function of restricting issuance of the decoding key 7 to a particular device. For example, the personal computer 3 may have a structure that the personal computer 3 issues the decoding key 7 only to the reproducing devices 5 which are capable of handling a high sound quality.

What is referred to as a content in the foregoing includes not only music data but also other information such as still image data, moving image data and character data. In other words, a distributing server of the present invention is not limited to the EMD server 1 but may be such a server which can distribute various types of contents mentioned above.

Further, while the foregoing described that host apparatuses of the present invention are the personal computers 3 and 43, to the extent of the functions described above, host apparatuses of the present invention may be other devices than personal computers. Examples include but not limited to mobile telephones, portable terminals, etc.

Further, while the foregoing described examples that there is one reproducing device 5 or three reproducing devices 5, it is needless to mention that any number of the reproducing devices 5 may be present to the extent not exceeding a reproducing-permitted device count. In addition, when a reproducing-permitted device count is to be changed, a change of a reproducing-permitted device count may only be conveyed to the distributing server at the step 101 which is shown in Fig. 6.

A program according to the present invention is a program which operates in co-operation with a computer and which makes the computer execute the functions of all or some means (or apparatuses, devices, elements, etc.) of the copyright management system according to the present invention described above.

A recording medium according to the present invention is a recording medium which can be read on a computer and which holds such a program which makes a computer execute the functions of all or some means (or apparatuses, devices, elements, etc.) of the copyright management system according to the present invention described above and which operates in co-operation with a computer when read to thereby execute said functions.

In this context, "some means (or apparatuses, devices, elements, etc.)" according to the present invention described above refer to one or some means among these plurality of means, and "some steps (or processes, operations, functions, etc.)" according to the present invention described above refer to one or some steps among these plurality of steps.

"Functions of means (or apparatus, devices, element, etc.)" according to the present invention described above refer to all or some functions of said means, and "operations at a step (or process, operation, function, etc. ) "according to the present invention described above refer to all or some operations of said step.

In one example of use, a program according to the present invention is recorded on a recording medium which can be read on a computer, and operates in co-operation with a computer.

In one example of use, a program according to the present invention is transmitted through a transmission medium, read on a computer, and operates in co-operation with a computer.

A data structure according to the present invention includes a database, a data format, a data table, a data list, a data type, etc.

The recording medium includes a ROM, etc., whereas the transmission medium includes a transmission medium such as the Internet, light, an electric wave, a sound wave, etc.

As described above, a computer referred to above in relation to the present invention is not limited pure hardware such as a CPU but may include firmware, OS, and further, peripheral equipment.

As described above, the structure according to the present invention may be realized by software or hardware.

### POSSIBILITY OF INDUSTRIAL USE

The present invention provides a host apparatus which is convenient for a user to use.

## Claims

1. A host apparatus which encodes a predetermined content by a predetermined encoding method, selects a particular reproducing device in accordance with the number of reproducing devices which are permitted to reproduce and sends, to said particular reproducing device thus selected, decoding information which is for decoding said encoded content.

2. The host apparatus of claim 1, further comprising selection instructing means which instructs said selection.

3. The host apparatus of claim 1, wherein said encoding uses a host ID which is peculiar to said host apparatus, and
said decoding information contains a device ID of said particular reproducing device and said host ID.

4. The host apparatus of claim 1, wherein said predetermined content and said information regarding the number of devices are distributed from a distributing server after encoded.
